# EUROPÄISCHE PATENTSCHRIFT

(11) **EP 0 887 386 B1**
(45) Veröffentlichungstag und Bekanntmachung des Hinweises auf die Patenterteilung: **09.04.2003**
(21) Anmeldenummer: 98810547.4
(22) Anmeldetag: 16.06.1998
(51) Int. Cl.: C09B 62/513, D06P 1/384

(54) **Verfahren zum Färben oder Bedrucken von cellulosehaltigen Fasermaterialien und neue Reaktivfarbstoffe**
Method for dyeing or printing cellulose-containing fibre-materials and new reactive dyes
Procédé de teinture ou d'impression de matériaux fibreux contenant de la cellulose et nouveaux colorants réactifs

(30) Priorität: 24.06.1997 CH 152997; 27.10.1997 CH 248697
(43) Veröffentlichungstag der Anmeldung: 30.12.1998
(60) Teilanmeldung: 02022523.1
(73) Patentinhaber: Ciba Specialty Chemicals Holding Inc., 4057 Basel (CH)
(72) Erfinder: Ruhlmann, Edmond, 68300 Saint-Louis (FR); Tzikas, Athanassios, 4133 Pratteln (CH); Klier, Herbert, 79588 Efringen-Kirchen (DE)

(56) Entgegenhaltungen:
- EP-A- 0 292 825

## Beschreibung

Die vorliegende Erfindung betrifft ein Verfahren zum Färben oder Bedrucken von cellulosehaltigen Fasermaterialien mit Reaktivfarbstoffen sowie neue Reaktivfarbstoffe.

Die Praxis des Färbens und Bedruckens mit Reaktivfarbstoffen hat in neuerer Zeit zu erhöhten Anforderungen an die Qualität der Färbungen und Drucke und die Wirtschaftlichkeit des Färbe- bzw. Druckprozesses geführt. Infolge dessen besteht weiterhin ein Bedarf nach neuen Verfahren, welche verbesserte Eigenschaften hinsichtlich Applikation sowie der erhaltenen Färbungen bzw. Drucke aufweisen.

Für das Färben bzw. Bedrucken werden heute Verfahren gefordert, worin die Reaktivfarbstoffe eine ausreichende Substantivität haben und zugleich eine gute Auswaschbarkeit der nicht fixierten Anteile aufweisen. Die Färbungen und Drucke sollten ferner eine gute färberische Ausbeute und hohe Fixiergrade aufweisen. Von den bekannten Verfahren werden diese Anforderungen nicht in allen Eigenschaften erfüllt.

In der EP-A-0 292 825 werden bisreaktive Trisazofarbstoffe zum Färben oder Bedrucken von cellulosehaltigen Fasermaterialien offenbart, die an der Phenylenkomponente durch Sulfo substituiert sind.

Der vorliegenden Erfindung liegt daher die Aufgabe zugrunde, neue, verbesserte Verfahren für das Färben und Bedrucken von Fasermaterialien zu finden, welche die oben charakterisierten Qualitäten in hohem Masse besitzen. Die neuen Verfahren sollten sich vor allem durch hohe Fixierausbeuten und hohe Faser-Farbstoff-Blndungsstabilltäten der Reaktivfarbstoffe auszeichnen, und ausserdem sollten die nicht auf der Faser fixierten Anteile leicht auswaschbar sein. Sie sollten ferner Färbungen und Drucke mit guten Allgemeinechthelten, beispielsweise Licht- und Nassechtheiten, ergeben.

Es hat sich gezeigt, dass mit dem weiter unten definierten Verfahren die gestellte Aufgabe weitgehend gelöst wird.

Gegenstand der vorliegenden Erfindung ist ein Verfahren zum Färben oder Bedrucken von cellulosehaltigen Fasermaterialien, welches dadurch gekennzeichnet ist, dass man mindestens einen Reaktivfarbstoff der Formel 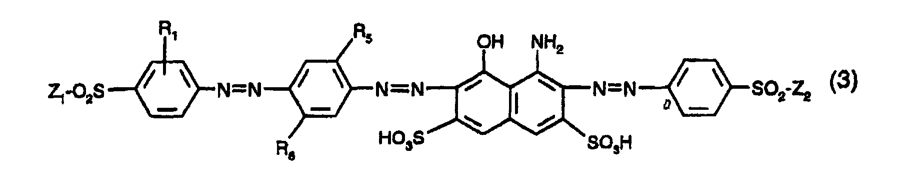 verwendet, worin
R₁ Wasserstoff oder Sulfo,
R₅ im Alkylteil durch Sulfato substituiertes C₁-C₄-Alkoxy,
R₆ C₁-C₄-Alkyl,
Z₁ und Z₂ unabhängig voneinander Vinyl oder den Rest -CH₂-CH₂-U bedeuten und
U ein Rest -OSO₃H ist.

In den Reaktivfarbstoffen der Formel (3) vorhandene Sulfogruppen können generell sowohl als freie Säure (-SO₃H) als auch In einer beliebigen Salzform, z.B. als Alkali-, Erdalkali- oder Ammoniumsalz oder als Salz eines organischen Amins wie etwa dem Natrium-, Kalium-, Lithium- oder Ammoniumsalz, dem Salz des Triethanolamins oder dem Mischsalz zweier oder mehrerer verschiedener Kationen, z.B. als Na/Li-, Na/NH₄- oder Na/Li/NH₄-Mischsalz, vorliegen.

Als C₁-C₄-Alkyl kommt für R₆ z.B. Methyl, Aethyl, Propyl, Isopropyl, Butyl, sek.-Butyl, tert.-Butyl oder Isobutyl, insbesondere Methyl, in Betracht.

Als C₁-C₄-Alkoxy kommt für R₅ z.B. Methoxy, Äthoxy, Propoxy, Isopropoxy, Butoxy oder Isobutoxy in Betracht. Der Rest R₅ ist in der Bedeutung als C₁-C₄-Alkoxy durch Sulfato substituiert. Als Beispiel für solche Reste sel -O-CH₂CH₂-OSO₃H genannt.

Z₁ und Z₂ bedeuten unabhängig voneinander je Vinyl oder insbesondere β-Sulfatoethyl. Die Reste Z₁ und Z₂ können verschieden oder gleich sein und sind bevorzugt gleich.

Die Reste der Formeln -SO₂-Z₁ und -SO₂-Z₂ sind in den Reaktivfarbstoffen der obigen Formel (1) bevorzugt in para-Stellung, relativ zur Azobrücke, gebunden.

Für R₁ ist die Bedeutung als Sulfo von besonderem Interesse.

R₅ ist vorzugsweise ein Rest der Formel -O-CH₂CH₂-OSO₃H.

R₆ ist vorzugsweise Methyl.

Vorzugsweise ist R₅ der Rest -O-CH₂CH₂-OSO₃H und R₆ Methyl.

Das erfindungsgemässe Verfahren eignet sich zum Färben und Bedrucken von cellulosehaltigen Fasermaterialien aller Art. Solche cellulosehaltige Fasermaterialien sind beispielsweise die natürlichen Cellulosefasem, wie Baumwolle, Leinen und Hanf, sowie Zellstoff und regenerierte Cellulose. Das erfindungsgemässe Verfahren eignet sich auch zum Färben oder Bedrucken von cellulosehaltigen Fasern, die in Mischgeweben enthalten sind, z.B. von Gemischen aus Baumwolle mit Polyesterfasern oder Polyamidfasern. Besonders geeignet ist das erfindungsgemässe Verfahren zum Färben oder Bedrucken von Baumwolle.

Für das erfindungsgemässe Verfahren können die üblichen Färbe- bzw. Druckverfahren verwendet werden. Die Färbeflotten oder Druckpasten können ausser Wasser und den Farbstoffen weitere Zusätze, beispielsweise Netzmittel, Antischaummittel, Egalisiermittel oder die Eigenschaft des Textilmaterials beeinflussende Mittel, wie z.B. Weichmachungsmittel, Zusätze zum Flammfestausrüsten oder schmutz-, wasser- und öl-abweisende Mittel sowie wasserenthärtende Mittel und natürliche oder synthetische Verdicker, wie z.B. Alginate und Celluloseäther, enthalten.

Für das erfindungsgemässe Verfahren können die Mengen, in denen die Reaktivfarbstoffe in den Färbebädern verwendet werden, je nach der gewünschten Farbtiefe schwanken, im allgemeinen haben sich Mengen von 0,01 bis 10 Gewichtsprozent, insbesondere 0,01 bis 6 Gewichtsprozent, bezogen auf das Färbegut, als vorteilhaft erwiesen.

Bevorzugt für das erfindungsgemässe Verfahren ist das Färben, insbesondere das Färben nach dem Ausziehverfahren oder vorzugsweise dem Foulard-Färbeverfahren.

Gemäss dem Ausziehverfahren erfolgt das Färben in der Regel in wässrigem Medium, bei einem Flottenverhältnis von beispielsweise 1:2 bis 1:60, insbesondere einem Flottenverhältnis von 1:5 bis 1:20, und einer Temperatur von 20 bis 105°C, insbesondere 40 bis 90°C, und vorzugsweise 40 bis 80°C.

Gemäss dem Foulard-Färbeverfahren wird die Ware in der Regel mit wässrigen, gegebenenfalls salzhaltigen Farbstofflösungen imprägniert. Die Flottenaufnahme beträgt hierbei z.B. 20 bis 150%, insbesondere 40 bis 120% und vorzugsweise 50 bis 100%, bezogen auf das Gewicht des zu färbenden Fasermaterials. Gegebenenfalls enthält die Flotte bereits Fixieralkall, oder das Fasermaterial wird nach der Imprägnierung mit Fixieralkali behandelt. Als Alkali kommen z.B. Natriumcarbonat, Natriumbicarbonat, Natriumhydroxid, Dinatriumphosphat, Trinatriumphosphat, Borax, wässriges Ammoniak, Natriumtrichloracetat, Natriumformiat oder eine Mischung aus Wasserglas und einer wässrigen Natriumcarbonatlösung in Betracht. Bevorzugt sind hierbei Alkalihydroxid und/oder Alkalicarbonat, insbesondere Natriumhydroxid und/oder Natriumcarbonat.
Die Fixierung kann beispielsweise durch Wärmeeinwirkung, wie durch Dämpfen des imprägnierten Fasermaterials bei einer Temperatur von z.B. 100 bis 120°C, vorzugsweise im Sattdampf, erfolgen. Gemäss dem sogenannten Kaltverweilverfahren wird der Farbstoff zusammen mit dem Alkali auf dem Foulard aufgebracht und danach durch mehrstündiges Lagern, z.B. 3 bis 40 Stunden, bei Raumtemperatur fixiert. Nach dem Fixieren werden die Färbungen oder Drucke gegebenenfalls unter Zusatz eines dispergierend wirkenden Mittels gründlich gespült.

Die gemäss dem erfindungsgemässen Verfahren erhaltenen Färbungen und Drucke zeichnen sich durch ein gutes Aufbauvermögen sowie gute Egalität aus. Die Fixiergrade sind hoch und die nicht fixierten Anteile können leicht ausgewaschen werden, wobei die Differenz zwischen Ausziehgrad und Fixiergrad klein, d.h. der Seifverlust gering ist Die gemäss dem erfindungsgemässen Verfahren erhaltenen Färbungen und Drucke besitzen eine hohe Farbstärke und eine hohe Faser-Farbstoff-Bindungsstabilität, weiterhin eine gute Lichtechtheit und sehr gute Nassechtheitselgenschaften, wie Wasch-, Wasser-, Seewasser-, Ueberfärbe- und Schweissechtheiten, sowie eine gute Pllssierechtheit, Bügelechtheit und Reibechtheit.

Gegenstand der vorliegenden Erfindung sind ferner konzentrierte, wässrige Formulierungen, welche dadurch gekennzeichnet sind, dass sie 5 bis 50 Gew.-% mindestens eines Reaktivfarbstoffs der oben angegebenen Formel (3) enthalten. Für die Reaktivfarbstoffe der Formel (3) gelten hierbei die oben angegebenen Bedeutungen und Bevorzugungen.

Bevorzugt enthalten die erfindungsgemässen wässrigen Formulierungen 5 bis 40 Gew.-%, insbesondere 10 bis 40 Gew.-% und vorzugsweise 10 bis 30 Gew.-% mindestens eines Reaktivfarbstoffs der Formel (3).

Die Formulierungen sind vorzugsweise auf einen pH-Wert von 3 bis 8, insbesondere 3 bis 7 und vorzugswelse 4 bis 7 gestellt. Die Einstellung des pH-Wertes erfolgt mit einem Puffer, wie z.B. durch Zusatz eines Polyphosphats oder eines Hydrogen/Dihydrogenphosphat-Puffers. Als weitere Puffer seien Natrium- oder Kaliumacetat, Natrium- oder Kaliumoxalat und Natriumborat sowie deren Mischungen genannt.

Femer können die Formulierungen noch eine die Wasserlöslichkeit des Farbstoffs verbessernde Komponente, wie z.B. ε-Caprolactam oder N-Methylpyrrolidon, enthalten. Diese Komponenten werden In der Regel in einer Menge von 0,1 bis 30 Gew-%, bezogen auf das Gesamtgewicht der Formulierung, verwendet.

Weiterhin können die Formulierungen eigenschaftsverbessernde Hilfsmittel, wie z.B. Tenside, schaumdämpfende Hilfsmittel, Frostschutzmittel oder das Pilz- und/oder Bakterienwachstum verhindernde Mittel, enthalten. Diese Hilfsmittel sind in der Regel in geringen Mengen, wie z.B. je ca. 1 bis 10 g/l, enthalten.

Die erfindungsgemässen Formulierungen sind über einen längeren Zeitraum lagerstabil, dünnflüssig und können insbesondere in den oben angegebenen Verfahren zum Färben verwendet werden.

Gegenstand der vorliegenden Erfindung sind ferner Reaktlvfarbstoffe der Formel 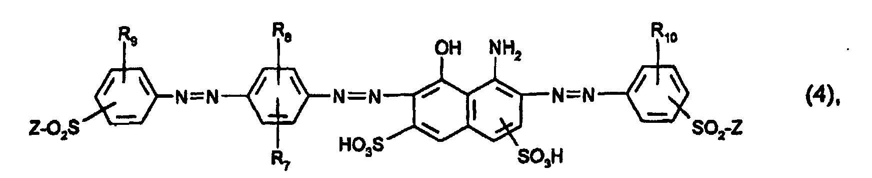 worin
R₇, R₉ und R₁₀ unabhängig voneinander Wasserstoff, C₁-C₄-Alkyl, C₁-C₄-Alkoxy oder Halogen bedeuten,
R₈ durch Sulfato substituiertes C₁-C₄-Alkoxy und
Z Vinyl, β-Sulfatoäthyl, β-Chloräthyl oder β-Acetoxyäthyl ist.

R₇, R₉ und R₁₀ bedeuten unabhängig voneinander Wasserstoff, C₁-C₄-Alkyl, wie z.B. Methyl, Aethyl, n-Propyl, Isopropyl, C₁-C₄-Alkoxy, wie z.B. Methoxy, Aethoxy, Isopropoxy, oder Halogen, wie z.B. Fluor, Brom oder insbesondere Chlor. Vorzugsweise bedeutet R₇ C₁-C₄-Alkyl, insbesondere Methyl. Vorzugsweise bedeuten R₉ und R₁₀ je Wasserstoff.

### Bevorzugt sind ferner die erfindungsgemässen Farbstoffe der Formel

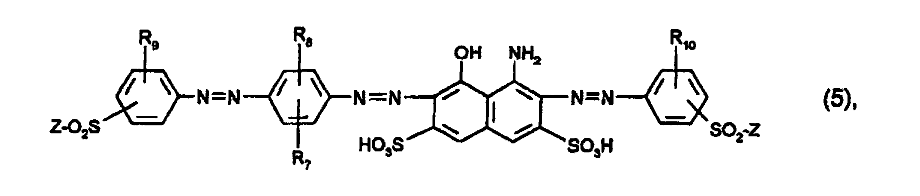

worin R₇, R₈, R₉, R₁₀ und Z die unter Formel (4) angegebenen Bedeutungen und Bevorzugungen haben.

Besonders bevorzugt sind die erfindungsgemässen Farbstoffe der Formel 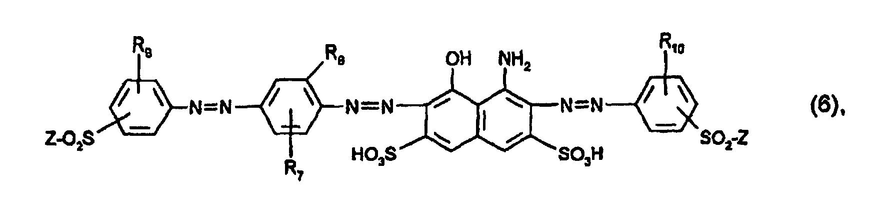 worin R₇, R₈, R₉, R₁₀ und Z die unter Formel (4) angegebenen Bedeutungen und Bevorzugungen haben.

Ganz besonders bevorzugt sind Farbstoffe der Formel (4), (5) und (6), worin R₉ und R₁₀ Wasserstoff sind.

Wichtig sind die Farbstoffe der Formel 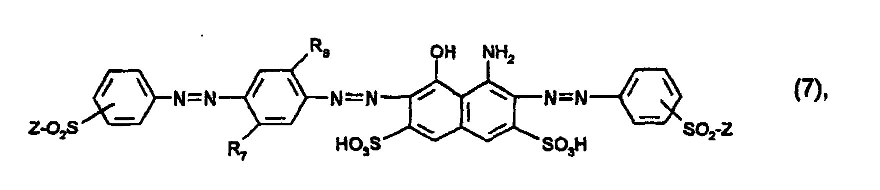 worin R₇ C₁-C₄-Alkyl, insbesondere Methyl, R₈ durch Sulfato substituiertes C₁-C₄-Alkoxy, insbesondere β-Sulfatoäthoxy, und Z Vinyl, β-Chloräthyl oder β-Sulfatoäthyl ist.

Besonders wichtig sind Farbstoffe der Formel 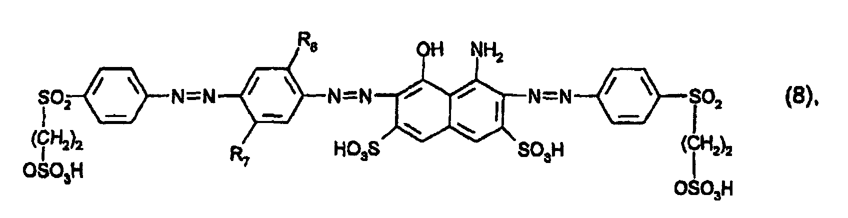 worin R₇ C₁-C₄-Alkyl, insbesondere Methyl, ist und R₈ ein durch Sulfato substituierter C₁-C₄-Alkoxyrest, Insbesondere β-Sulfatoäthoxy, ist. Ganz besonders wichtig ist der Farbstoff der Formel (8), worin R₇ Methyl und R₈ β-Sulfatoäthoxy ist.

Gegenstand der Erfindung ist femer ein Verfahren zur Herstellung der Farbstoffe der Formel (4), welches dadurch gekennzeichnet ist, dass man zuerst eine Verbindung der Formel 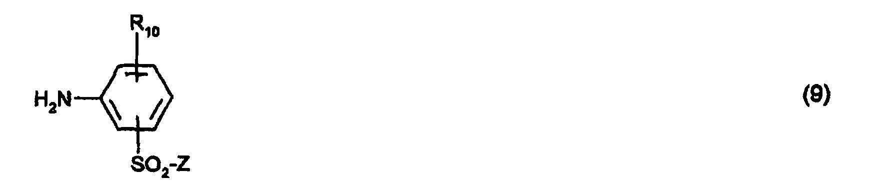 diazotiert und sauer auf eine Verbindung der Formel 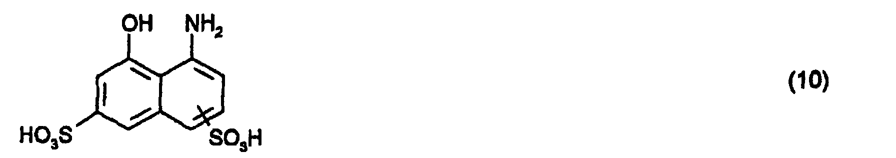 kuppelt, und anschliessend eine Verbindung der Formel 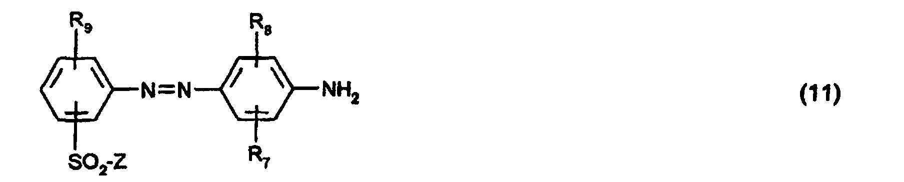 diazotiert und in alkalischem Medium auf die vorher gebildete Monoazoverbindung kuppelt, wobei R₇, R₈, R₉, R₁₀ und Z die unter Formel (4) angegebenen Bedeutungen haben.

Die Verbindungen der Formeln (9), (10) und (11) sind an sich bekannt oder können in Analogie zu bekannten Verbindungen hergestellt werden.

Die Verbindung der Formel (11) wird erhalten, indem man eine Verbindung der Formel 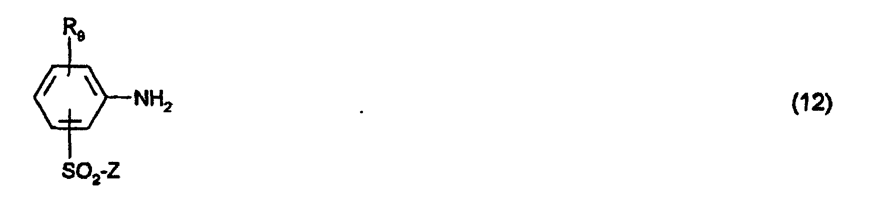 diazotiert und auf eine Verbindung der Formel 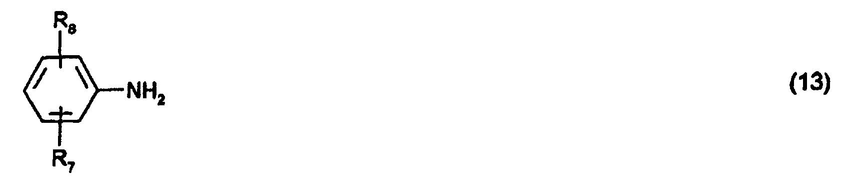 kuppelt, wobei R₇, R₈, R₉ und Z in den Formeln (12) und (13) die unter Formel (4) angegebenen Bedeutungen haben.

Ein Beispiel für Verbindungen der Formeln (9) und (12) ist 4-(β-Sulfatoäthylsulfonyl)-anilin. Beispiele für Verbindungen der Formel (10) sind H-Säure und K-Säure.
Beispiele für Verbindungen der Formel (13) sind 2-(β-Hydroxyäthoxy)-5-methylanilin und 2-(β-Sulfatoäthoxy)-5-methylanilin.

Die Diazotierung der Diazokomponenten bzw. der eine diazotierbare Aminogruppe enthaltenden Zwischenprodukte erfolgt in der Regel durch Einwirkung salpetriger Säure in wässrig-mineralsaurer Lösung bei tiefer Temperatur. Die Kupplung auf die Kupplungskomponente erfolgt bei stark sauren, neutralen bis schwach alkalischen pH-Werten.

Die oben angegebenen Reaktivfarbstoffe der Formel (3) können analog dem Verfahren zur Herstellung der Reaktivfarbstoffe der Formel (4) erhalten werden.

Die Reaktivfarbstoffe der Formel (4) können auch in Mischungen untereinander oder in Mischungen mit anderen Reaktivfarbstoffen oder nicht-reaktiven Farbstoffen, z.B. Säurefarbstoffen oder Dispersionsfarbstoffen, zum Färben oder Bedrucken der genannten Fasermaterialien verwendet werden.

In den erfindungsgemässen Reaktivfarbstoffen der Formel (4) vorhandene Sulfogruppen können generell sowohl als freie Säure (-SO₃H) als auch in einer beliebigen Salzform, z.B. als Alkali-, Erdalkali- oder Ammoniumsalz oder als Salz eines organischen Amins wie etwa dem Natrium-, Kalium-, Lithium- oder Ammoniumsalz, dem Salz des Triethanolamins oder dem Mischsalz zweier oder mehrerer verschiedener Kationen, z.B. als Na/Li-, Na/NH₄- oder Na/Li/NH₄-Mischsalz, vorliegen.

Die Reaktivfarbstoffe der Formel (4) eignen sich zum Färben und Bedrucken der verschiedensten Materialien, wie Seide, Leder, Wolle, Polyamidfasern und Polyurethanen, und insbesondere cellulosehaltiger Fasermaterialien aller Art. Solche Fasermaterialien sind beispielsweise die natürlichen Cellulosefasern, wie Baumwolle, Leinen und Hanf, sowie Zellstoff und regenerierte Cellulose, z.B. Viscose, ferner Modalfasern und deren Mischungen mit Baumwolle. Die Reaktivfarbstoffe der Formel (4) sind auch zum Färben oder Bedrucken von hydroxylgruppenhaltigen Fasern geeignet, die in Mischgeweben enthalten sind, z.B. von Gemischen aus Baumwolle mit Polyamidfasern, oder insbesondere Polyesterfasern.

Die erfindungsgemässen Reaktivfarbstoffe lassen sich auf verschiedene Weise auf das Fasermaterial applizieren und auf der Faser fixieren, insbesondere in Form von wässrigen Farbstofflösungen und -druckpasten. Sie eignen sich sowohl für das Ausziehverfahren als auch zum Färben nach dem Foulard-Färbeverfahren. Besondere Eignung finden die Reaktivfarbstoffe der Formel (4) für das weiter oben angegebene erfindungsgemässe Verfahren zum Färben oder Bedrucken sowie für die erfindungsgemässen konzentrierten, wässrigen Formulierungen.

Die Reaktivfarbstoffe der Formel (4) zeichnen sich durch hohe Reaktivität, gutes Fixiervermögen und ein sehr gutes Aufbauvermögen aus. Sie können daher nach dem Ausziehfärbeverfahren bei niedrigen Färbetemperaturen eingesetzt werden und erfordern beim Pad-Steam-Verfahren nur kurze Dämpfzeiten. Die Fixiergrade sind hoch und die nicht fixierten Anteile können leicht ausgewaschen werden, wobei die Differenz zwischen Ausziehgrad und Fixiergrad bemerkenswert klein, d.h. der Seifverlust sehr gering ist. Die Reaktivfarbstoffe der Formel (4) eignen sich auch besonders zum Druck, vor allem auf Baumwolle, ebenso aber auch zum Bedrucken von stickstoffhaltigen Fasern, z.B. von Wolle oder Seide oder von Mischgeweben, die Wolle oder Seide enthalten.

Die mit den erfindungsgemässen Reaktivfarbstoffen der Formel (4) hergestellten Färbungen und Drucke besitzen eine hohe Farbstärke und eine hohe Faser-Farbstoff-Bindungsstabilität, sowohl in saurem als auch in alkalischem Bereich, weiterhin eine gute Lichtechtheit und sehr gute Nassechtheitseigenschaften, wie Wasch-, Wasser-, Seewasser-, Ueberfärbe- und Schweissechtheiten, sowie eine gute Plissierechtheit, Bügelechtheit und Reibechtheit.

Die nachfolgenden Beispiele dienen zur Erläuterung der Erfindung. Die Temperaturen sind in Celsiusgraden angegeben, Teile sind Gewichtsteile, die Prozentangaben beziehen sich auf Gewichtsprozente, sofern nicht anders vermerkt. Gewichtsteile stehen zu Volumenteilen im Verhältnis von Kilogramm zu Liter.

### Beispiel 1:

Herstellung des 1. Teilchromophors: 588,5 Teile Schwefelsäure (100%) werden vorgelegt und 167,2 Teile 2-(β-Hydroxyäthoxy)-5-methylanilin so zugegeben, dass die Temperatur 30°C nicht übersteigt. Anschliessend wird bei 30°C während 4 Stunden nachgerührt und dann langsam auf eine Eis/Wasser-Mischung ausgetragen. Man erhält eine Verbindung, die in Form der freien Säure der Formel (100) entspricht 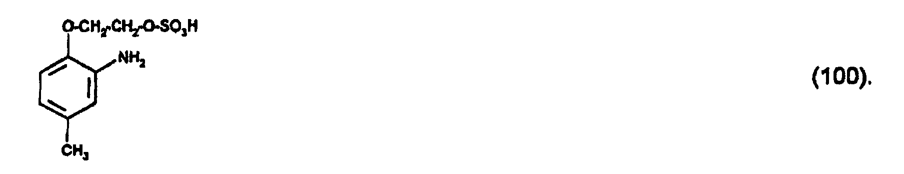 120 Teile 4-(β-Sulfatoäthylsulfonyl)-anilin werden in 225 Teilen Wasser angeschlämmt, mit 52,5 Teilen 30%-iger NaOH-Lösung gelöst, in 450 Teile Eis eingetragen und mit 103 Teilen 32%-iger Salzsäure versetzt. Anschliessend werden 104 Teile Natriumnitritlösung (4N) innerhalb von 30 Minuten bei 0 bis 5°C zugetropft und 15 Minuten gerührt. Die erhaltene Diazosuspension wird wie folgt auf die Verbindung der Formel (100) gekuppelt: 99,0 Teile der Verbindung der Formel (100) werden mit 500 Teilen Wasser angeschlämmt und mit 30%-iger NaOH-Lösung auf pH-Wert 5 gestellt, wobei die Temperatur auf 0 bis 5°C gehalten wird. Die Diazosuspension wird zugegeben und der pH mit NaOH (2N) auf den Wert 5 gestellt. Man erhält in guter Ausbeute den Farbstoff der in Form der freien Säure der Formel 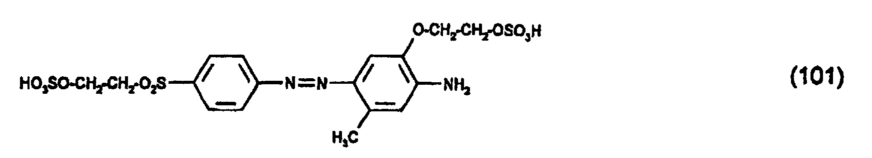 entspricht. Der Farbstoff der Formel (101) kann als Kaliumsalz abgeschieden werden.

Herstellung des 2. Teilchromophors: 15 Teile 4-(β-Sulfatoäthylsulfonyl)-anilin werden in 75 Teilen Wasser angeschlämmt, mit 6,7 Teilen 30%-iger NaOH-Lösung gelöst, in 30 Teile Eis eingetragen und mit 14 Teilen 32%-iger Salzsäure versetzt. Anschliessend werden 13,2 Teile Natriumnitritlösung (4N) innerhalb von 45 Minuten bei 10°C zugetropft und 15 Minuten gerührt. Die erhaltene Diazosuspension wird wie folgt auf H-Säure gekuppelt: 16,0 Teile H-Säure werden in 55 Teilen Wasser angeschlämmt und innerhalb von 10 Minuten zu der Diazosuspension zulaufen gelassen. Bei 10 bis 15°C wird während 3 Stunden weitergerührt. Man erhält die Monoazosuspension des Farbstoffes, der in Form der freien Säure der Formel (102) entspricht

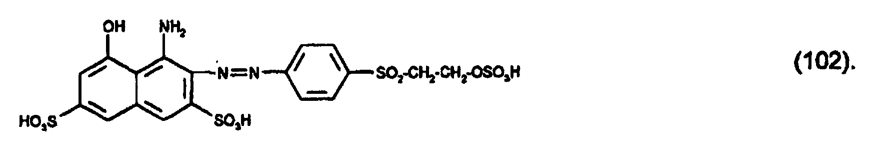

### Herstellung des Farbstoffes der Formel

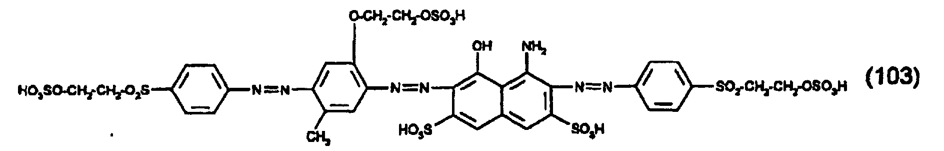

aus den beiden Teilchromophoren (101) und (102):
28,3 Teile der Verbindung der Formel (101) werden in 200 Tellen Wasser angeschlämmt und mit 11 Teilen 32%-iger Salzsäure versetzt und auf 30°C erwärmt. Anschliessend werden 13,2 Teile Natriumnitritlösung (4N) innerhalb von 45 Minuten bei 30°C zudosiert. Zu dieser Diazosuspension lässt man die erhaltene Monoazosuspension des Farbstoffes der Formel (102) zulaufen, wobei der pH mit NaOH (2N) auf 7,5 gestellt wird. Man lässt noch einige Stunden nachrühren. Anschliessend wird das Produkt mittels Umkehrosmose entsalzt und gefriergetrocknet. Man erhält den Farbstoff der in Form der freien Säure der Formel (103) entspricht und der Baumwolle in olivgrünen Farbtönen färbt.

### Färbevorschrift I

2 Teile des gemäss Beispiel 1 erhaltenen Reaktivfarbstoffes werden in 400 Teilen Wasser gelöst; dazu gibt man 1500 Teile einer Lösung, die pro Liter 53 g Natriumchlorid enthält. In dieses Färbebad geht man bei 40°C mit 100 Teilen Baumwollgewebe ein. Nach 45 Minuten werden 100 Teile einer Lösung, die pro Liter 16 g Natriumhydroxid und 20 g kalziniertes Soda enthält, zugegeben. Danach wird die gefärbte Ware gespült, während einer Viertelstunde mit einem nichtionogenen Waschmittel kochend geseift, nochmals gespült und getrocknet.

### Druckvorschrift

3 Teile des gemäss Beispiel 1 erhaltenen Reaktivfarbstoffes werden unter schnellem Rühren in 100 Teile einer Stammverdickung, enthaltend 50 Teile 5%ige Natriumalginatverdickung, 27,8 Teile Wasser, 20 Teile Harnstoff, 1 Teil m-nitrobenzolsulfonsaures Natrium sowie 1,2 Teile Natriumhydrogencarbonat, eingestreut. Mit der so erhaltenen Druckpaste bedruckt man ein Baumwollgewebe, trocknet und dämpft den erhaltenen bedruckten Stoff 2 Minuten bei 102°C in gesättigtem Dampf. Das bedruckte Gewebe wird dann gespült, gegebenenfalls kochend geseift und nochmals gespült, und anschliessend getrocknet.

## Patentansprüche

1. Verfahren zum Färben oder Bedrucken von cellulosehaltigen Fasermaterialien, **dadurch gekennzeichnet, dass** man mindestens einen Reaktivfarbstoff der Formel 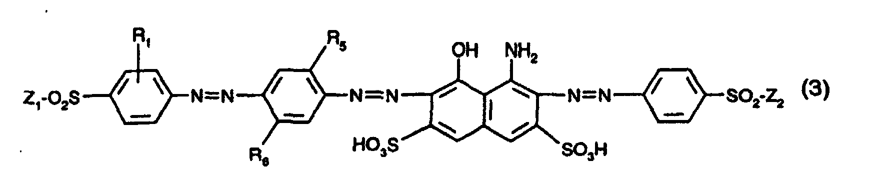 verwendet, worin
R₁ Wasserstoff oder Sulfo,
R₅ im Alkylteil durch Sulfato substituiertes C₁-C₄-Alkoxy,
R₆ C₁-C₄-Alkyl,
Z₁ und Z₂ unabhängig voneinander Vinyl oder den Rest -CH₂-CH₂U bedeuten und
U ein Rest -OSO₃H ist.

2. Verfahren gemäss Anspruch 1, **dadurch gekennzeichnet, dass** R₁ Sulfo ist.

3. Verfahren gemäss einem der Ansprüche 1 und 2, **dadurch gekennzeichnet, dass** man das cellulosehaltige Fasermaterial nach dem Ausziehverfahren oder dem Foulard-Färbeverfahren färbt.

4. Verfahren gemäss einem der Ansprüche 1 bis 3, **dadurch gekennzeichnet, dass** man das cellulosehaltige Fasermaterial nach dem Foulard-Färbeverfahren färbt.

5. Verfahren gemäss einem der Ansprüche 1 bis 3, **dadurch gekennzeichnet, dass** man das cellulosehaltige Fasermaterial nach dem Ausziehverfahren bei einer Temperatur von 20 bis 105 °C, insbesondere 40 bis 80 °C, und einem Flottenverhältnis von 1:2 bis 1:60, insbesondere 1:5 bis 1:20, färbt.

6. Verfahren gemäss einem der Ansprüche 1 bis 5, **dadurch gekennzeichnet, dass** es sich bei dem cellulosehaltigen Fasermaterial um Baumwolle handelt.

7. Konzentrierte, wässrige Formulierungen, **dadurch gekennzeichnet, dass** sie 5 bis 50 Gew.-% mindestens eines Reaktivfarbstoffs der Formel 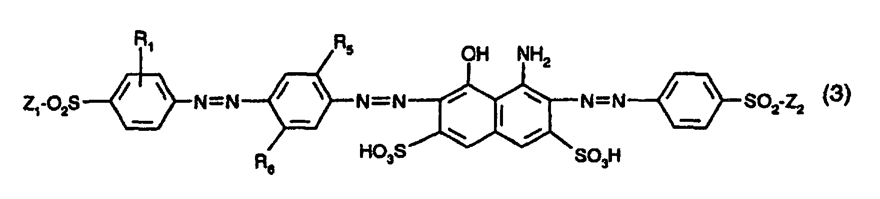 enthalten, worin
R₁ Wasserstoff oder Sulfo,
R₅ im Alkylteil durch Sulfato substituiertes C₁-C₄-Alkoxy,
R₆ C₁-C₄-Alkyl,
Z₁ und Z₂ unabhängig voneinander Vinyl oder den Rest -CH₂-CH₂-U bedeuten und
U ein Rest -OSO₃H ist.

8. Reaktivfarbstoffe der Formel 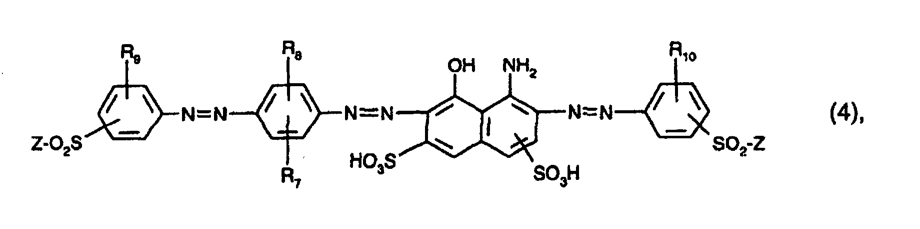 worin
R₇, R₉ und R₁₀ unabhängig voneinander Wasserstoff, C₁-C₄-Alkyl, C₁-C₄-Alkoxy oder Halogen bedeuten,
R₈ durch Sulfato substituiertes C₁-C₄-Alkoxy und
Z Vinyl, β-Sulfatoäthyl, β-Chloräthyl oder β-Acetoxyäthyl ist.

9. Verfahren zur Herstellung von Farbstoffen der Formel (4), **dadurch gekennzeichnet, dass** man zuerst eine Verbindung der Formel 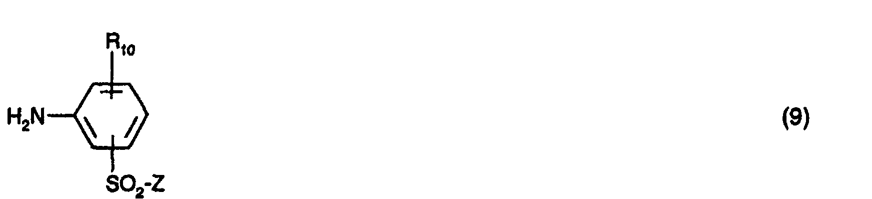 diazotiert und sauer auf eine Verbindung der Formel 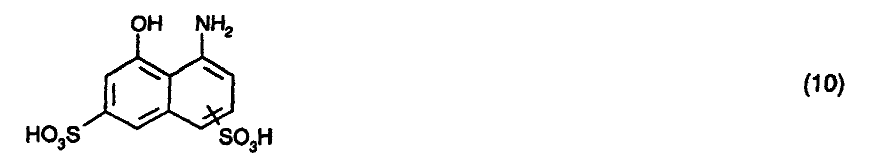 kuppelt, und anschliessend eine Verbindung der Formel 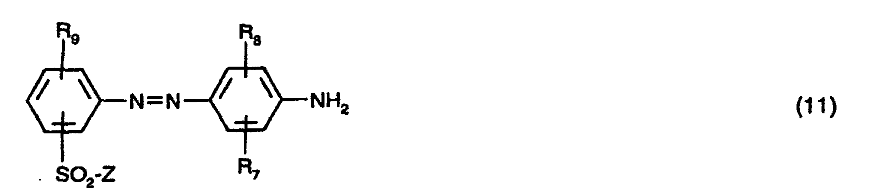 diazotiert und in alkalischem Medium auf die vorher gebildete Monoazoverbindung kuppelt, wobei R₇, R₈, R₉, R₁₀ und Z die in Anspruch 8 angegebenen Bedeutungen haben.

## Claims

1. A process for dyeing or printing cellulosic fibre materials, which comprises using at least one reactive dye of formula 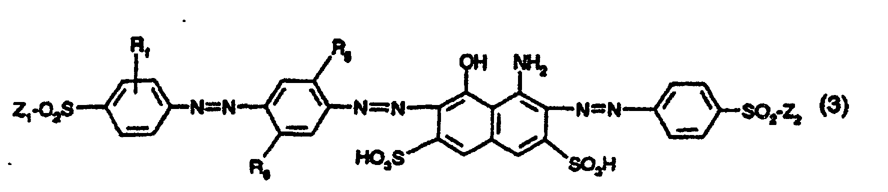 in which
R₁ is hydrogen or sulfo,
R₅ is C₁-C₄alkoxy which is substituted in the alkyl moiety by sulfato,
R₆ is C₁-C₄alkyl,
Z₁ and Z₂ are each independently of the other vinyl or the radical -CH₂-CH₂-U, and
U is a radical -OSO₃H.

2. A process according to claim 1, wherein R₁ is sulfo

3. A process according to either claim 1 or claim 2, wherein the cellulosic fibre material is dyed by the exhaust process or by the pad-dyeing process.

4. A process according to any one of claims 1 to 3, wherein the cellulosic fibre material is dyed by the pad-dyeing process.

5. A process according to any one of claims 1 to 3, wherein the cellulosic fibre material Is dyed by the exhaust process at a temperature from 20 to 105 °C, preferably from 40 to 80°C, and at a liquor ratio of 1:2 to 1:60, preferably of 1:5 to 1:20.

6. A process according to any one of claims 1 to 5, wherein the cellulosic fibre material is cotton.

7. A concentrated aqueous formulation, which comprises 5 to 50 % by weight of at least one reactive dye of formula 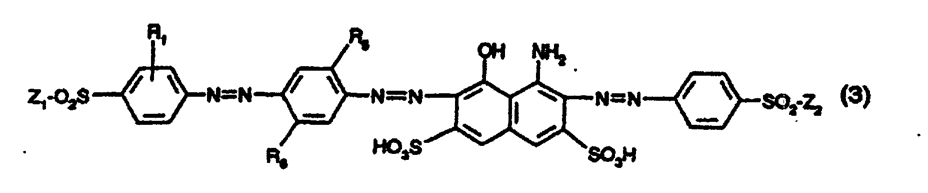 in which
R₁ is hydrogen or sulfo,
R₅ is C₁-C₄alkoxy which is substituted in the alkyl moiety by sulfato,
R₆ is C₁-C₄alkyl,
Z₁ and Z₂ are each independently of the other vinyl or the radical -CH₂-CH₂-U, and
U is a radical -OSO₃H.

8. A reactive dye of formula 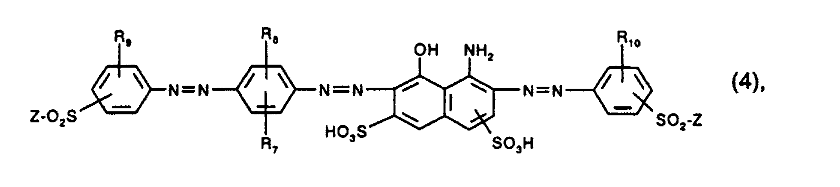 in which
R₇, R₉ and R₁₀ are each independently of one another hydrogen, C₁-C₄alkyl, C₁-C₄alkoxy or halogen,
R₈ is sulfato-substituted C₁-C₄alkoxy, and
Z is vinyl, β-sulfatoethyl, β-chloroethyl or β-acetoxyethyl.

9. A process for preparing a dye of formula (4), which comprises first diazotising a compound of formula 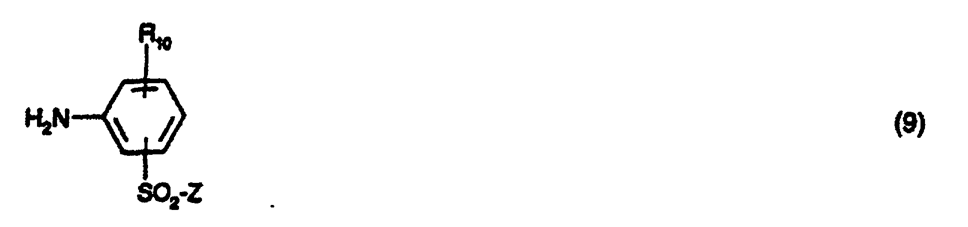 and coupling the product acidically with a compound of formula 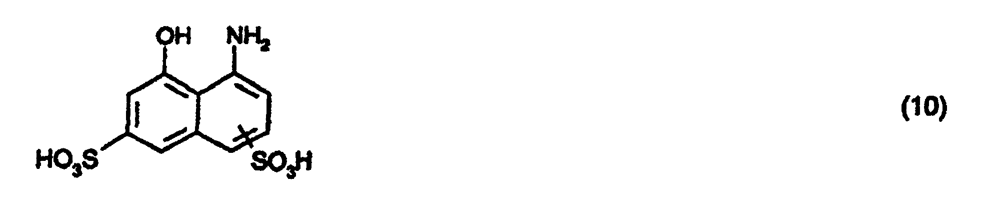 and then diazotising a compound of formula 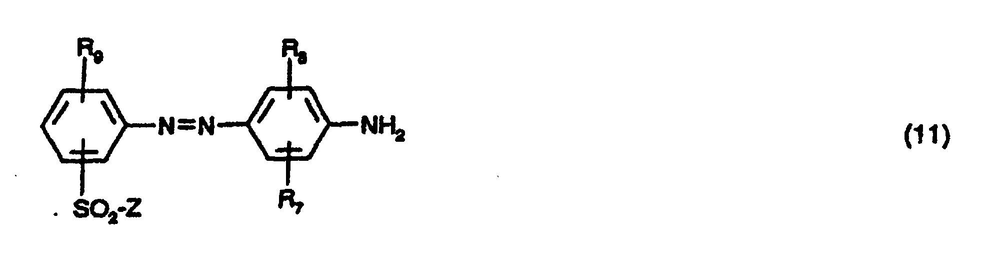 and coupling the product in an alkaline medium with the monoazo compound formed beforehand,
R₇, R₈, R₉, R₁₀ and Z being as defined in claim 8.

## Revendications

1. Procédé pour la teinture ou l'impression de matières fibreuses cellulosiques, **caractérisé en ce qu'**on utilise au moins un colorant de formule 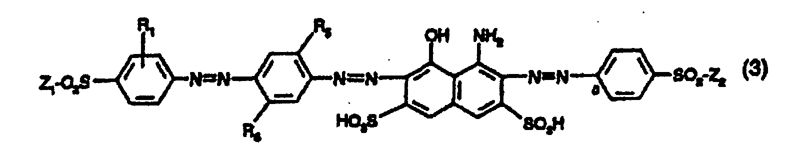 dans laquelle
R₁ représente un atome d'hydrogène ou un groupe sulfo,
R₅ représente un groupe alkoxy en C₁-C₄ substitué par un substituant sulfato dans le fragment alkyle,
R₆ représente un groupe alkyle en C₁-C₄,
Z₁ et Z₂ représentent, indépendamment l'un de l'autre, un groupe vinyle ou un reste -CH₂CH₂-U et
U est un reste -OSO₃H.

2. Procédé selon la revendication 1, **caractérisé en ce que** R₁ représente un groupe sulfo.

3. Procédé selon l'une des revendications 1 ou 2, **caractérisé en ce qu'**on teint la matière fibreuse cellulosique selon le procédé d'épuisement ou le procédé de teinture par foulardage.

4. Procédé selon l'une des revendications 1 à 3, **caractérisé en ce qu'**on teint la matière fibreuse cellulosique selon le procédé de teinture par foulardage.

5. Procédé selon l'une des revendications 1 à 3, **caractérisé en ce qu'**on teint la matière fibreuse cellulosique selon le procédé d'épuisement à une température de 20 à 105°C, en particulier de 40 à 80°C, et pour une longueur de bain de 1:2 à 1:60, en particulier de 1:5 à 1:20.

6. Procédé selon l'une des revendications 1 à 5, **caractérisé en ce qu'**il s'agit pour la matière fibreuse cellulosique du coton.

7. Formulations aqueuses concentrées **caractérisées en ce qu'**elles présentent une teneur de 5 à 50 % en poids en au moins un colorant réactif de formule 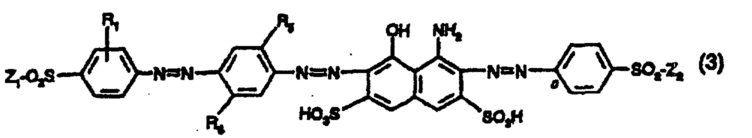 dans laquelle
R₁ représente un atome d'hydrogène ou un groupe sulfo,
R₅ représente un groupe alkoxy en C₁-C₄ substitué par un substituant sulfato dans le fragment alkyle,
R₆ représente un groupe alkyle en C₁-C₄,
Z₁ et Z₂ représentent, indépendamment l'un de l'autre, un groupe vinyle ou un reste -CH₂CH₂-U et
U est un reste -OSO₃H.

8. Colorants réactifs de formule 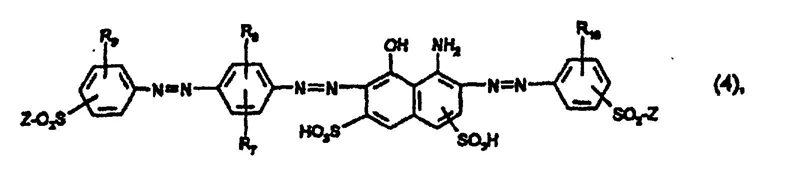 où
R₇, R₉ et R₁₀ représentent, indépendamment les uns des autres, un atome d'hydrogène, des groupes alkyle en C₁-C₄, alkoxy en C₁-C₄ ou halogène,
R₈ représente un groupe alkoxy en C₁-C₄ substitué par un substituant sulfato et
Z représente des groupes vinyle, β-sulfatoéthyle, β-chloréthyle ou β-acétoxyéthyle.

9. Procédé pour la préparation de colorants de formule (4) **caractérisé en ce qu'**on diazote d'abord un composé de formule 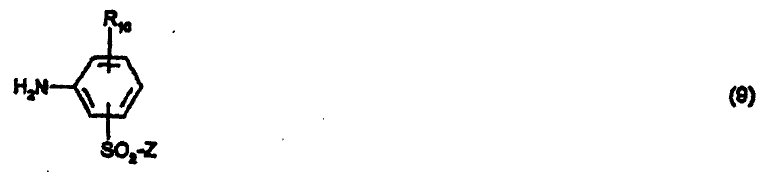 et on copule en milieu acide sur un composé de formule 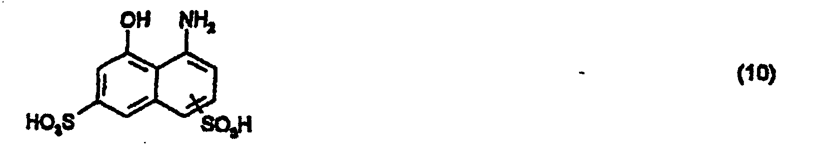 et ensuite on diazote un composé de formule 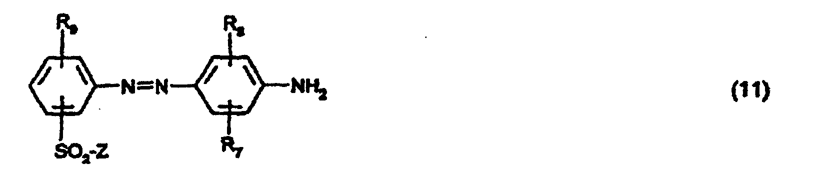 et on copule en milieu alcalin sur le composé monoazoïque formé auparavant, R₇, R₈, R₉, R₁₀ et Z possèdent les significations données à la revendication 8.
